Europäisches Patentamt

European Patent Office

Office européen des brevets

(11) Publication number: **0 304 274 B1**

# EUROPEAN PATENT SPECIFICATION

(45) Date of publication of patent specification: **22.12.93** (51) Int. Cl.⁵: **C08K 5/51**, C08L 57/08, C08L 27/04

(21) Application number: **88307594.7**

(22) Date of filing: **16.08.88**

(54) Chlorine-containing resin compositions.

(30) Priority: **19.08.87 JP 205872/87**

(43) Date of publication of application:
**22.02.89 Bulletin 89/08**

(45) Publication of the grant of the patent:
**22.12.93 Bulletin 93/51**

(84) Designated Contracting States:
**DE GB NL**

(56) References cited:
**DE-A- 1 952 624**
**FR-A- 1 198 168**
**GB-A- 1 177 767**

(73) Proprietor: **DAINIPPON INK AND CHEMICALS, INC.**
**35-58, Sakashita 3-chome**
**Itabashi-ku, Tokyo 174(JP)**

(72) Inventor: **Aoyagi, Kohshiki**
**153-14, Ohya**
**Ohmiya-shi Saitama-ken(JP)**
Inventor: **Kubota, Gunji**
**1-152, Nakamaru**
**Kitamoto-shi Saitama-ken(JP)**

(74) Representative: **Myerscough, Philip Boyd et al**
**J.A.Kemp & Co.**
**14, South Square**
**Gray's Inn**
**London, WC1R 5EU (GB)**

## Description

This invention relates to a chlorine-containing resin composition excellent in weatherability, especially chalking resistance.

Vinyl chloride resins, typical of chlorine-containing resins, have been so far used as eaves gutters, deck materials, pipes, window frames, etc. by coloring them with pigments. These colored molded articles however suffer a problem with weatherability. When they are exposed to the open air for a long period of time, they cause not only fading, but also a so-called chalking phenomenon (whitening phenomenon) that the surface exposed to sunlight turns white as if it has a bloom. Moreover, the chlorine-containing resins are quite unstable to heat, and in molding upon heating, they are decomposed and colored, notably reducing mechanical strengths of the molded articles.

In order to remedy these defects, the chlorine-containing resins have hitherto optionally contained heat stabilizers to prevent heat deterioration, such as metallic soaps, lead compounds and organotin compounds, as well as one or more chalking inhibitors such as magnesium oxide, magnesium hydroxide, naphthenic acid metal salts, nickel chelate compounds and thiocyanic acid metal salts. In DE-A-1952624, FR-A-1198168 and GB-A-1177767, attempts have been made to stabilise chlorine containing resins with salts of organic phosphorus acids.

However, even if the chlorine-containing resin compositions are those containing the chalking inhibitors, their molded articles begin to turn white 3-30 months later when exposed to the open air.

Accordingly, it is an object of this invention to provide a chlorine-containing resin composition capable of forming a molded article that does not turn white even when exposed to the open air for a long period of time.

Under the circumstances, the present inventors have made extensive studies and consequently found that when a copper O,O′-dialkyldithiophosphate is added to a chlorine-containing resin, whitening of the molded article can be suppressed for an extremely long period of time. This finding has led to completion of this invention.

This invention provides a chlorine-containing resin composition comprising a chlorine-containing resin and a copper O,O′-dialkyldithiophosphate.

Examples of the copper O,O′-dialkyldithiophosphate are those having linear or branched alkyl groups with 3 to 10 carbon atoms. Copper O,O′-di-n-butyldithiophosphate and copper O,O′-di(2-ethylhexyl)-dithiophosphate are preferable.

The content of the copper O,O'-dialkyldithiophosphate in the composition is not limited in particular. However, as the high content promotes heat decomposition of resins in molding and adversely affects prevention of chalking, the content is usually 0.005 to 5 parts by weight, preferably 0.05 to 2 parts by weight per 100 parts by weight of the chlorine-containing resin.

Examples of the chlorine-containing resin used in this invention are a vinyl chloride resin, a vinylidene chloride resin, a vinyl chloride/vinylidene chloride copolymer, a copolymer of vinyl chloride or vinylidene chloride and ethylene, vinyl acetate, an acrylic ester or acrylonitrile, chlorinated polyvinyl chloride and chlorinated polyethylene. Of these, the vinyl chloride resin and the vinyl chloride/vinyl acetate copolymer (the vinyl acetate content: 15% by weight or less) are preferable.

The chlorine-containing resin composition of this invention may contain additives ordinarily used in chlorine-containig resins such as a chalking inhibitor, a UV absorber, a heat stabilizer, a stabilizer aid, an antioxidant, a lubricant, a plasticiser, a filler and a coloring agent.

Examples of the chalking inhibitor include inorganic compounds such as magnesium oxide, magnesium hydroxide, hydrotalcite and zinc oxide; naphthenic acid metal salts such as cobalt naphthenate; chelate compounds of dibutyldithiocarbamic acid and metals such as nickel, zinc and copper; nickel chelate compounds such as nickel bis[o-ethyl(3,5-di-tert-butyl-4-hydroxybenzyl)]phosphonate; thiocyanic acid metal salts such as copper thiocyanate and barium thiocyanate; and piperidine derivatives such as 4-benzoyloxy-2,2,6,6-tetramethylpiperidine.

Examples of the UV absorber include benzophenone derivatives such as 2-hydroxy-4-octoxybenzophenone; salicylic acid derivatives such as p-tert-butylphenyl salicylate; and benzotriazole derivatives such as 2-(2'-hydroxy-5-methylphenyl)benzotriazole.

Examples of the heat stabilizer include tribasic lead sulfate, dibasic lead stearate, dibasic lead phosphite and lead stearate; calcium-zinc composite heat stabilizers composed mainly of calcium stearate and zinc stearate; barium-zinc composite heat stabilizers composed mainly of barium stearate and zinc stearate; and organotin heat stabilizers such as butyltin maleate, octyltin maleate, butyltin laurate, dibutyltin laurate and octyltin mercaptan. One or more of these heat stabilizers are added in an amount of 0.5 to 8 parts by weight per 100 parts by weight of the chlorine-containing resin.

The following Examples and Comparative Examples illustrate this invention more specifically. By the way, parts in the examples are all by weight.

Examples 1-12 and Comparative Examples 1-9

A master batch comprising 100 parts of a vinyl chloride resin (degree of polymerization 1,100), 3 parts of a calcium-zinc composite stabilizer (2.5 parts of calcium stearate and 0.5 part of zinc stearate), 1 part of red iron oxide and 1 part of stearic acid was blended with a chalking inhibitor in an amount shown in Table 1 (provided a chalking inhibitor was not added in Comparative Example 9). They were uniformly dispersed and mixed, and then kneaded at 180°C for 3 minutes with two hot rolls, followed by pressing the resulting mixture into 1 mm-thick test pieces with a press molding machine of 190°C.

The thus obtained test pieces were exposed to a paint fading tester FM-1 (made by Suga Shikenki K.K.) for 1,200 hours and to the open air for 30 months, and a Y value (corresponding to lightness) of a XYZ display system was measured for the test pieces after the respective exposure tests. A degree of whitening (degree of chalking) was indicated by a different ($\Delta Y$) between the Y value of the initial test pieces and the Y value of the test pieces after exposure for a given period of time. The higher the Y value, the greater the whitening phenomenon. The results are shown in Table 1.

Examples 13-24 and Comparative Examples 10-19

Test pieces were obtained as in Example 1 except that a master batch comprising 100 parts of a vinyl chlorine resin (degree of polymerization 1,100), 5 parts of a lead stabilizer (2 parts of tribasic lead sulfate, 1.5 parts of dibasic lead stearate and 1.5 parts of dibasic lead phosphite), 0.96 part of a chromic acid pigment, 0.04 part of carbon black and 1 part of stearic acid was blended with a chalking inhibitor in an amount shown in Table 2 (provided a chalking inhibitor was not added in Comparative Example 19). Subsequently, the exposure tests were conducted as in Example 1. The results are shown in Table 2.

Examples 25-38 and Comparative Examples 20-28

Test pieces were obtained as in Example 1 except that a master batch comprising 100 parts of a vinyl chloride resin (degree of polymerization 1,100), 2.6 parts of a calcium-zinc composite stabilizer, 0.4 part of a tin stabilizer (butyltin maleate), 0.3 part of condensed azo brown, 0.1 part of copper phthalocyanine blue and 1 part of stearic acid was blended with a chalking inhibitor in an amount shown in Table 3 (provided a chalking inhibitor was not added in Comparative Exmple 28). Subsequently, the exposure tests were conducted as in Example 1. The results are shown in Table 3.

3

Table 1

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Chalking inhibitor (parts) | Copper O,O'-di-n-butyldithiophosphate | 0.01 | 0.08 | 0.1 | 1.0 | 1.8 | 4.5 | - | - | - | - | - | - |
| | Copper O,O'-di(2-ethylhexyl)dithiophosphate | - | - | - | - | - | - | 0.01 | 0.08 | 0.1 | 1.0 | 1.8 | 4.5 |
| | Magnesium oxide | - | - | - | - | - | - | - | - | - | - | - | - |
| | Magnesium hydroxide | - | - | - | - | - | - | - | - | - | - | - | - |
| | Cobalt naphthenate | - | - | - | - | - | - | - | - | - | - | - | - |
| | Nickel dibutyldithiocarbamate | - | - | - | - | - | - | - | - | - | - | - | - |
| | Copper thiocyanate | - | - | - | - | - | - | - | - | - | - | - | - |
| Degree of whitening ΔY | Fading tester 1200 hours | 2.3 | 1.4 | 1.3 | 0.8 | 1.1 | 2.1 | 2.5 | 2.4 | 2.4 | 1.8 | 1.8 | 2.4 |
| | Outdoor exposure 30 months | 2.0 | 1.1 | 1.1 | 0.8 | 1.0 | 1.9 | 2.3 | 2.0 | 1.9 | 1.5 | 1.6 | 2.2 |

– to be continued –

4

Table 1 (continued)

<table>
<tr><td rowspan="2" colspan="2"></td><th colspan="9">Comparative Examples</th></tr>
<tr><th>1</th><th>2</th><th>3</th><th>4</th><th>5</th><th>6</th><th>7</th><th>8</th><th>9</th></tr>
<tr><td rowspan="7">Chalking inhibitor (parts)</td><td>Copper O,O'-di-n-butyldithiophosphate</td><td>-</td><td>-</td><td>-</td><td>-</td><td>-</td><td>-</td><td>-</td><td>-</td><td>-</td></tr>
<tr><td>Copper O,O'-di(2-ethyl-hexyl)dithiophosphate</td><td>-</td><td>-</td><td>-</td><td>-</td><td>-</td><td>-</td><td>-</td><td>-</td><td>-</td></tr>
<tr><td>Magnesium oxide</td><td>0.1</td><td>5</td><td>10</td><td>-</td><td>-</td><td>-</td><td>-</td><td>5</td><td>-</td></tr>
<tr><td>Magnesium hydroxide</td><td>-</td><td>-</td><td>-</td><td>5</td><td>-</td><td>-</td><td>-</td><td>-</td><td>-</td></tr>
<tr><td>Cobalt naphthenate</td><td>-</td><td>-</td><td>-</td><td>-</td><td>1.0</td><td>-</td><td>-</td><td>-</td><td>-</td></tr>
<tr><td>Nickel dibutyldithio-carbamate</td><td>-</td><td>-</td><td>-</td><td>-</td><td>-</td><td>1.0</td><td>-</td><td>1.0</td><td>-</td></tr>
<tr><td>Copper thiocyanate</td><td>-</td><td>-</td><td>-</td><td>-</td><td>-</td><td>-</td><td>1.0</td><td>-</td><td>-</td></tr>
<tr><td rowspan="2">Degree of whitening $\Delta Y$</td><td>Fading tester 1200 hours</td><td>10.3</td><td>4.3</td><td>3.9</td><td>4.5</td><td>5.1</td><td>4.9</td><td>5.2</td><td>3.2</td><td>10.5</td></tr>
<tr><td>Outdoor exposure 30 months</td><td>10.4</td><td>4.1</td><td>4.1</td><td>4.2</td><td>4.8</td><td>5.0</td><td>4.9</td><td>3.9</td><td>10.8</td></tr>
</table>

Table 2

| | | Examples | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Chalking inhibitor (parts) | Copper O,O'-di-n-butyldithiophosphate | 0.01 | 0.08 | 0.1 | 1.0 | 1.8 | 4.5 | - | - | - | - | - | - |
| | Copper O,O'-di(2-ethyl-hexyl)dithiophosphate | - | - | - | - | - | - | 0.01 | 0.08 | 0.1 | 1.0 | 1.8 | 4.5 |
| | Magnesium oxide | - | - | - | - | - | - | - | - | - | - | - | - |
| | Magnesium hydroxide | - | - | - | - | - | - | - | - | - | - | - | - |
| | Cobalt naphthenate | - | - | - | - | - | - | - | - | - | - | - | - |
| | Nickel dibutyldithio-carbamate | - | - | - | - | - | - | - | - | - | - | - | - |
| | Copper thiocyanate | - | - | - | - | - | - | - | - | - | - | - | - |
| Degree of whitening ΔY | Fading tester 1200 hours | 3.6 | 3.2 | 3.2 | 3.2 | 3.3 | 3.5 | 3.9 | 3.3 | 3.6 | 3.5 | 3.6 | 4.1 |
| | Outdoor exposure 30 months | 3.2 | 3.0 | 2.9 | 3.0 | 3.1 | 3.5 | 3.6 | 3.1 | 3.0 | 3.6 | 3.5 | 3.9 |

Table 2 (continued)

| | | Comparative Examples | | | | | | | | | |
|---|---|---|---|---|---|---|---|---|---|---|---|
| | | 10 | 11 | 12 | 13 | 14 | 15 | 16 | 17 | 18 | 19 |
| Chalking inhibitor (parts) | Copper O,O'-di-n-butyldithiophosphate | - | - | - | - | - | - | - | - | - | - |
| | Copper O,O'-di(2-ethyl-hexyl)dithiophosphate | - | - | - | - | - | - | - | - | - | - |
| | Magnesium oxide | 5 | 10 | 10 | - | - | - | - | 5 | - | - |
| | Magnesium hydroxide | - | - | - | 10 | 10 | - | - | - | 5 | - |
| | Cobalt naphthenate | - | - | - | - | - | 1 | - | - | 1 | - |
| | Nickel dibutyldithio-carbamate | - | - | - | - | - | - | 1 | 1 | - | - |
| | Copper thiocyanate | - | - | 1 | - | 1 | - | - | - | - | - |
| Degree of whitening $\Delta Y$ | Fading tester 1200 hours | 10.6 | 9.8 | 7.8 | 9.8 | 7.7 | 6.7 | 7.2 | 6.9 | 6.0 | 12.8 |
| | Outdoor exposure 30 months | 11.3 | 10.7 | 8.2 | 10.7 | 8.3 | 6.7 | 7.5 | 7.1 | 5.9 | 13.5 |

EP 0 304 274 B1

EP 0 304 274 B1

Table 3

| | | Examples | | | | | | | | | | | | |
|---|---|---|---|---|---|---|---|---|---|---|---|---|---|---|
| | | 25 | 26 | 27 | 28 | 29 | 30 | 31 | 32 | 33 | 34 | 35 | 36 | 37 | 38 |
| Chalking inhibitor (parts) | Copper O,O'-di-n-butyldithiophosphate | 0.01 | 0.08 | 0.1 | 1.0 | 1.8 | 4.5 | – | – | – | – | – | – | 0.1 | – |
| | Copper O,O'-di(2-ethyl-hexyl)dithiophosphate | – | – | – | – | – | – | 0.01 | 0.08 | 0.1 | 1.0 | 1.8 | 4.5 | | 0.1 |
| | Magnesium oxide | – | – | – | – | – | – | – | – | – | – | – | – | 5 | 5 |
| | Magnesium hydroxide | – | – | – | – | – | – | – | – | – | – | – | – | – | – |
| | Cobalt naphthenate | – | – | – | – | – | – | – | – | – | – | – | – | – | – |
| | Nickel dibutyldithio-carbamate | – | – | – | – | – | – | – | – | – | – | – | – | – | – |
| | Copper thiocyanate | – | – | – | – | – | – | – | – | – | – | – | – | – | – |
| Degree of whitening $\Delta Y$ | Fading tester 1200 hours | 1.8 | 1.1 | 1.0 | 0.8 | 0.9 | 1.5 | 2.6 | 2.3 | 2.1 | 1.6 | 1.7 | 2.5 | 0.6 | 1.5 |
| | Outdoor exposure 30 months | 1.6 | 1.1 | 1.0 | 0.7 | 0.8 | 1.3 | 2.4 | 2.0 | 1.7 | 1.3 | 1.4 | 2.1 | 0.5 | 1.7 |

– to be continued –

Table 3 (continued)

| Chalking inhibitor (parts) | Comparative Examples | | | | | | | | |
|---|---|---|---|---|---|---|---|---|---|
| | 20 | 21 | 22 | 23 | 24 | 25 | 26 | 27 | 28 |
| Copper O,O'-di-n-butyldithiophosphate | – | – | – | – | – | – | – | – | – |
| Copper O,O'-di(2-ethyl-hexyl)dithiophosphate | – | – | – | – | – | – | – | – | – |
| Magnesium oxide | 10 | 5 | 5 | 5 | – | – | – | – | – |
| Magnesium hydroxide | – | – | – | – | 10 | 10 | 10 | 10 | – |
| Cobalt naphthenate | – | 0.1 | – | – | – | 0.1 | – | – | – |
| Nickel dibutyldithio-carbamate | – | – | 0.1 | – | – | – | 0.1 | – | – |
| Copper thiocyanate | – | – | – | 0.1 | – | – | – | 0.1 | – |
| Degree of whitening ΔY — Fading tester 1200 hours | 3.5 | 4.2 | 3.8 | 3.2 | 3.6 | 3.5 | 3.5 | 2.9 | 6.4 |
| Degree of whitening ΔY — Outdoor exposure 30 months | 3.7 | 3.9 | 3.8 | 2.9 | 3.6 | 3.6 | 3.7 | 2.4 | 7.2 |

As is seen from the foregoing results, the chlorine-containing resin composition of this invention is excellent in weatherability, especially chalking resistance, and suitable for use in molded articles which are exposed to the open air for a long period of time, such as eaves gutters, deck materials and window frames.

## Claims

1. A chlorine-containing resin composition comprising a chlorine-containing resin and a copper O,O'-dialkyldithiophosphate.

2. A composition according to claim 1 wherein the copper O,O'-dialkyldithiophosphate is copper O,O'-di-n-butyldithiophosphate and/or copper O,O'-di(2-ethylhexyl) dithiophosphate.

3. A composition according to claim 1 or 2 wherein the centent of the copper O,O'-dialkyldithiophosphate is from 0.05 to 5 parts by weight per 100 parts by weight of the chlorine-containing resin.

4. A composition according to any one of the preceding claims wherein the chlorine-containing resin is a vinyl chlorine resin and/or a vinyl chloride/vinyl acetate copolymer having a vinyl acetate content of 15% by weight or less.

5. A composition according to any one of the preceding claims, further comprising a heat stabilizer.

6. A composition according to claim 5 wherein a lead heat stabilizer and/or a calcium-zinc composite heat stabilizer and/or an organotin heat stabilizer is present.

7. A composition according to claim 5 or 6 wherein the content of the heat stabilizer is 0.5 to 8 parts by weight per 100 parts by weight of the chlorine-containing resin.

8. A molded article prepared from a composition as claimed in any one of the preceding claims.

**Patentansprüche**

1. Chlor-enthaltende Hart Zusammensetzung, umfassend ein Chlor-enthaltendes Hart und ein Kupfer o,o'-Dialkyldithiophosphat.

2. Zusammensetzung gemäss Anspruch 1, worin das Kupfer o,o'-Dialkyldithiophosphat, Kupfero,o'-Di-n-butyldithiophosphat und/oder o,o'-Di(2-ethylhexyl)dithiophosphat ist.

3. Zusammensetzung gemäss Anspruch 1 oder 2, worin der Gehalt des Kupfer o,o'-Dialkyldithiophosphates, 0.05 bis 5 Gewichtsteile pro 100 Gewichtsteile des Chlor-enthaltenden Harzes beträgt.

4. Zusammensetzung nach einem der vorhergehenden Ansprüche, worin das Chlor-enthaltende Harz ein Vinylchloridharz und/oder ein Vinylchlorid/Vinylacetat Copolymer, mit einem Vinylacetat Gehalt von 15 Gew.% oder weniger, ist.

5. Zusammensetzung nach einem der vorhergehenden Ansprüche, die weiter ein Wärmestabilisiermittel umfasst.

6. Zusammensetzung gemäss Anspruch 5, worin ein Blei-Wärmestabilisiermittel und/oder ein Calzium-Zink Verbund Wärmestabilisiermittel und/oder ein zinnhaltiges organisches Wärmestabilisiermittel anwesend ist.

7. Zusammensetzung gemäss Anspruch 5 oder 6, worin der Gehalt des Wärmestabilisiermittels 0.5 bis 8 Gewichtsteile pro 100 Gewichtsteile Chlor-enthaltendes Harz, ist.

8. Formkörper, hergestellt aus einer Zusammensetzung, wie in einem der vorhergehenden Ansprüche beansprucht.

**Revendications**

1. Composition de résine renfermant du chlore, comprenant une résine renfermant du chlore et un O,O'-dialkyldithiophosphate de cuivre.

2. Composition selon la revendication 1, dans laquelle le O,O'-dialkyldithiophosphate de cuivre est le O,O'-di(n-butyl)dithiophosphate de cuivre et/ou le O,O'-di(2-éthylhexyl)dithiophosphate de cuivre.

3. Composition selon la revendication 1 ou 2, dans laquelle la proportion de O,O'-dialkyldithiophosphate de cuivre est de 0,05 à 5 parties en poids pour 100 parties en poids de la résine renfermant du chlore.

4. Composition selon l'une quelconque des revendications précédentes, dans laquelle la résine renfermant du chlore est une résine de chlorure de vinyle et/ou un copolymère de chlorure de vinyle et d'acétate de vinyle, ayant une teneur en acétate de vinyle de 15 % en poids ou moins.

5. Composition selon l'une quelconque des revendications précédentes, comprenant en outre un agent de stabilisation vis-à-vis de la chaleur.

**6.** Composition selon la revendication 5, dans laquelle est présent un agent de stabilisation vis-à-vis de la chaleur à base de plomb et/ou un agent de stabilisation vis-à-vis de la chaleur à base de calcium et de zinc et/ou un agent de stabilisation vis-à-vis de la chaleur à base de dérivé organique de l'étain.

**7.** Composition selon la revendication 5 ou 6, dans laquelle la proportion de l'agent de stabilisation vis-à-vis de la chaleur est de 0,5 à 8 parties en poids pour 100 parties en poids de la résine renfermant du chlore.

**8.** Article moulé, préparé à partir d'une composition telle que revendiquée dans l'une quelconque des revendications précédentes.